# EUROPEAN PATENT SPECIFICATION

(11) **EP 2 453 706 B1**
(45) Date of publication and mention of the grant of the patent: **31.07.2013**
(21) Application number: 10290612.0
(22) Date of filing: 16.11.2010
(51) Int. Cl.: H04W 52/02, H04W 88/08

(54) **A small cell base station for wireless telecommuncations, and a method of switching between states**
Kleinzellige Basisstation für drahtlose Telekommunikation und Verfahren zum Umschalten zwischen Zuständen
Station de base de petites cellules pour télécommunications sans fil et procédé pour commuter d'un état à l'autre

(43) Date of publication of application: 16.05.2012
(73) Proprietor: Alcatel Lucent, 75007 Paris (FR)
(72) Inventor: Ashraf, Imran, Swindon SN5 5AA (GB); Ho, Lester Tse Wee, Swindon SN5 5GD (GB)
(74) Representative: Sarup, David Alexander

(56) References cited:
- WO-A1-2010/110189
- LUIS M CORREIA ET AL: "Challenges and enabling technologies for energy aware mobile radio networks", IEEE COMMUNICATIONS MAGAZINE, IEEE SERVICE CENTER, PISCATAWAY, US, vol. 48, no. 11, 1 November 2010 (2010-11-01), pages 66-72, XP011320499, ISSN: 0163-6804
- ASHRAF I ET AL: "Power savings in small cell deployments via sleep mode techniques", 2010 IEEE 21ST INTERNATIONAL SYMPOSIUM ON PERSONAL, INDOOR AND MOBILE RADIO COMMUNICATIONS WORKSHOPS (PIMRC WORKSHOPS); 26-30 SEPT. 2010; INSTANBUL, TURKEY, IEEE, PISCATAWAY, NJ, USA, 26 September 2010 (2010-09-26), pages 307-311, XP031837067, ISBN: 978-1-4244-9117-9

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the terms small cells and femtocells interchangeably and generically for cells that are smaller than macrocells.

One way to establish a femtocell is to provide a femtocell base station that operates within a relatively limited range within the coverage area of a macrocell. One example of use of a femtocell base station is to provide wireless communication coverage within a building. The femtocell base station is of a relatively low transmit power and hence each femtocell is of a small coverage area compared to a macrocell. A typical coverage range is tens of metres.

Femtocell base stations have auto-configuring properties so as to support plug-and-play deployment by users, for example in which femto base stations may integrate themselves into an existing macrocell network so as to connect to the core network of the macrocell network.

Femtocell base stations are intended primarily for users belonging to a particular home or office. Some femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. An alternative to such a wired broadband backhaul is to have a wireless backhaul.

The femtocell base station also includes a radio frequency (RF) transceiver connected to an antenna for radio communications.

Femtocell base stations are sometimes referred to as femtos.

One problem of femtocell base stations is how to control energy consumption, for example for reasons of environmental sustainability, in particular in view of expected large-scale deployment. For example, one study predicts that within a couple of years, by the end of 2012, 36 million femtocell base stations will be deployed worldwide. Assuming that each one consumes 12Watts, which is equivalent to approximately 105 KiloWatt hours (KWh) in a year, the total power consumption would be approximately 4 x 10⁹ KWh each year. Depending how the power is produced, this could be responsible for 2 million tonnes of CO₂ per year.

A known approach to the reduction of energy consumption by femtocell base stations is described in a paper by Asraf I, Ho L T W, and Claussen H entitled "Improving Energy Efficiency of Femtocell Base Stations via User Activity Detection", Proceedings of the IEEE WCNC, Sydney Australia, April 2010 and in a paper by Claussen H, Ashraf I, and Ho L T W entitled "Dynamic Idle Mode Procedures for Femtocells", Bell Labs Technical Journal, Vol.5, No.2, September 2010, ISSN 1089-7089. This approach relates to a femtocell base station that disables its pilot transmissions and associated radio processing when no active calls are being made by users in the vicinity, be they registered or unregistered users. This is achieved by providing a low power "sniffer" function in the femto that enables detection of an active call between a macrocell base station and a user terminal. When a user terminal located within the coverage area of the femto makes a call connection to the macrocell, the sniffer detects a rise in the received power on the uplink frequency band. If this rise, which may be considered a noise rise, exceeds a predetermined threshold, the user terminal that is detected is deemed to be close enough to be potentially covered by the femtocell. The rise is detectable since the user terminal transmits at reasonably high power to the macrocell while being located close to the femto.

Further background is provided in Agenda Item 17.1.2. from Mitsubishi Electric entitled "Energy saving for HeNBs" for 3GPP TSG RAN WG3 Meeting #68 10th-14th May 2010.

It is known from International (P.C.T.) Patent Publication W02010/110189 to provide a method of switching a small cell base station for wireless telecommunications between states, the method comprising:
taking measurements at multiple times in each of at least one predetermined period of the level of small cell base station usage for wireless telecommunications,
determining from the measurements estimates of level of usage expected as a function of time in a further period,
selecting the state of the small cell base station dependent upon the expected level of usage and the time within the further period, and
the small cell base station switching to the selected state.

### Summary

The present invention is characterised over the disclosure of W02010/110189 in that the states comprise an active state, a light dormant state and a deep dormant state;
in which in the light dormant state the small cell base station does not make pilot signal transmissions and monitors the small cell for user terminals using a receiver of signals at the frequency band of a macrocell; and
in which in the deep dormant state the small cell base station does not make pilot signal transmissions and the receiver of the signals at the frequency band of the macrocell is inactive so the small cell base station does not monitor the small cell for user terminals.

The inventors of the present application realised that a different approach was possible. The reader is referred to the appended independent claims. Some preferred features are laid out in the dependent claims.

Preferred embodiments provide automatic transitioning between different states of femtocell base stations based on user traffic profiling. Preferred embodiments allow automatic activation of power-saving states without relying on core network control or wake-up requests from user terminals.

Preferred embodiments provide a small cell base station that is able to autonomously switch between different states dependent upon historical usage patterns. By profiling the user terminals' pattern of usage of the small cell base station, switching between different states of the femtocell base station is automatically controlled. In other words, some preferred embodiments enable usage-based autonomous activation/deactivation of sleep states in small cells.

In some embodiments, a light sleep state is selected when the usage is expected to be moderate, and a deep sleep state is selected when usage is expected to be very low or non-existent. In both sleep states, pilot transmissions by the small cell base station are disabled hence interference to neighbouring cells is reduced.

In the light sleep state, a receiver of signals at the frequency band of a macrocell within which the small cell base station resides may be kept active. These receivers, sometimes known as sniffer receivers, can cause a small cell base station in light sleep state to have 60% of the power consumption of the same small cell base station in active state. In the deep sleep state, the sniffer receiver may be switched-off to significantly reduce power consumption. Preferred embodiments include an intelligent mechanism to continuously monitor the usage of the small cell base station and switch off the sniffer receiver when not required so as to achieve power savings.

In addition to reductions in power consumption, preferred embodiments advantageously provide less "capturing" by the femtocell base station of "undesired" user terminals, undesired in that these user terminals are not registered to use the femtocell base station. This means there are fewer undesired cell selection or handover attempts, and hence less associated signalling. Preferred embodiments also cause less interference to neighbouring cells as they make pilot transmissions only for part of the time. On a similar basis, due to the use of the deep sleep state, there is reduced radio frequency interference to macrocell-connected user terminals not registered with the femtocell base station and who are passing through, and less electromagnetic radiation exposure to users. As more hardware is switched off when not required, this may lead to greater possible acceptance by users to having femtocell base stations in their homes and workplaces.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 shows in more detail a femtocell base station,
Figure 4 is a state transition diagram illustrating the possible states of the femtocell base station and the automatic transits between the states based on expected usage, and
Figure 5 is a flow chart illustrating the procedure in the femto to automatically transit from Light Sleep (LS) state to Deep Sleep (DS) state.

### Detailed Description

We now describe a network including femtocell base stations then look in greater detail at femtos transiting between states, where the states are awake, light sleep and deep sleep states.

### Network

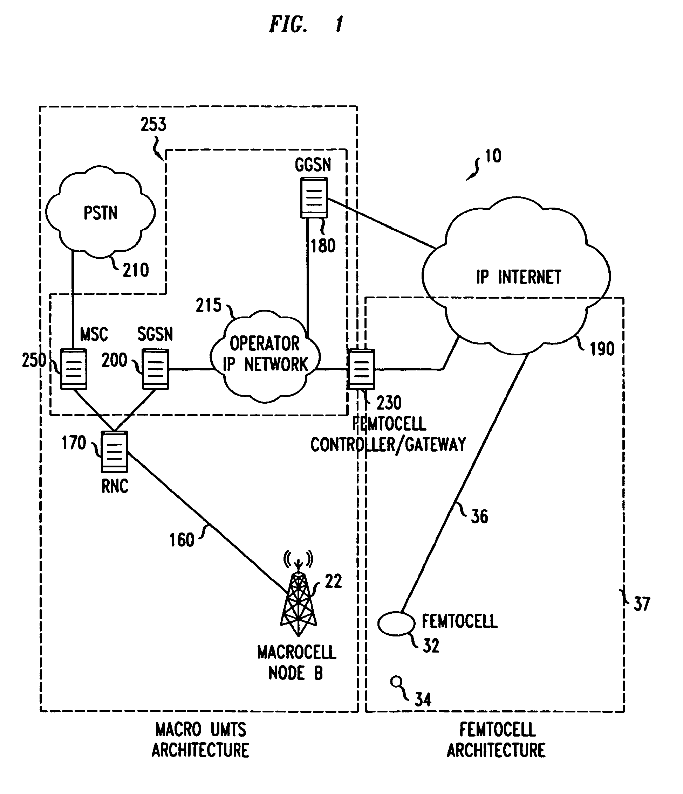

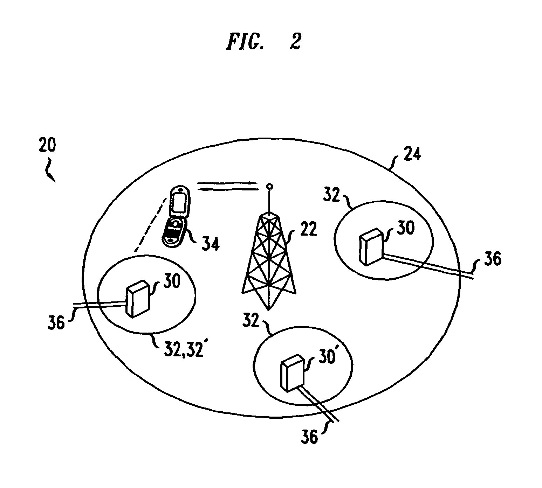

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with service general packet radio service support nodes (SGSNs) 220 and a gateway general packet radio support node (GGSN) 180. The GGSN then communicates with a packet-switch core 190 such as, for example, the Internet.

The SGSN 220 and GGSN 180 are connected by an operator IP network 215 to a femtocell controller/gateway 230. The MSC 250, SGSN 220, GGSN 180, location server/state controller 191 and operator IP network 215 constitute a so-called core network 253.

The femtocell controller/gateway 230 is connected via the Internet 190 to the femtocell base stations 32. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Femtocell base stations

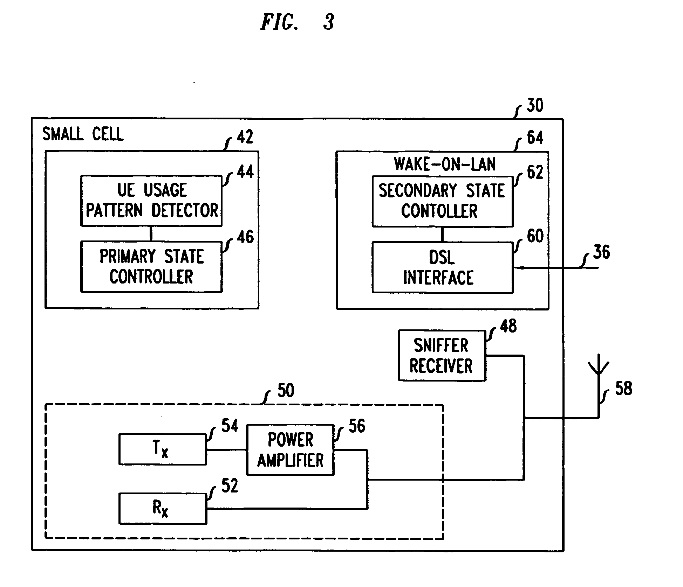

As shown in Figure 3, each femto 30 includes a processor 42 which includes a detector 44 of usage of the femto by user terminals, in other words user terminal traffic patterns. The detector 44 is connected to a primary state controller 46. In use, the primary state controller 46 makes decisions based on usage information from the detector 44 to control the state of the femto 30, as described in more detail below.

The primary state controller is connected to a sniffer receiver 48 which is a signal detector operating in the macrocell's frequency band, and to a transmitter-receiver stage 50. The transmitter-receiver stage 50 includes a radio frequency receiver 52 and a radio frequency transmitter 54 connected to a power amplifier 56. The sniffer receiver 48 and transmitter-receiver stage 50 are both connected to an antenna 58.

The femto also includes a Digital Subscriber Line (DSL) interface 60 for broadband Internet Protocol backhaul connection 36. The DSL interface 60 is connected to a secondary state controller 62. The DSL interface 60 and secondary state controller 62 together constitute a so called "Wake-on-LAN"controller 64. The secondary state controller 62 can respond to commands received by the DSL interface 60 from the core network via the backhaul link 36 to alter the state of the femto 30, specifically by controlling the transmitter-receiver stage 50 and sniffer receiver 48.

### Switching between Femto states

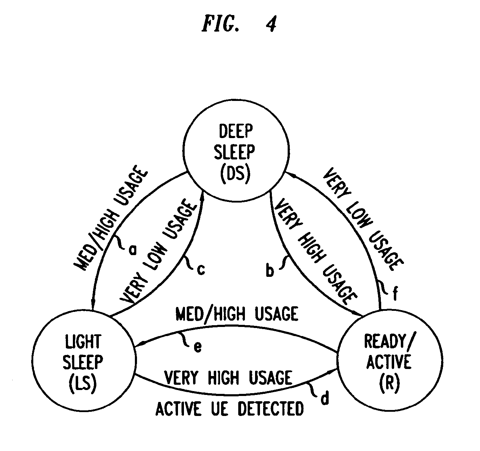

As shown in Figure 4, each femto is in one of three states and may transit between them.

The three states are ready/active state, light sleep state and deep sleep state.

### Deep Sleep State

In deep sleep (DS) state, the components of the femto are all switched off except for the `Wake-on-LAN' controller 64, so energy consumption in this state is low. The 'Wake-on-LAN' controller 64 is used to transfer the femto to one of the other two states (light sleep or ready/active) dependent of a corresponding control message from the core network via the DSL backhaul 36. As most components of the femto are switched off, the boot-up time, in other words the times to transit to light sleep state or ready/active state, is of the order of seconds or minutes.

In deep sleep state, the femto is not capable of receiving or decoding any over-air radio transmissions.

### Light Sleep State

In light sleep (LS) state, the femto's transmitter-receiver 50 is switched off, so the femto does not make pilot transmissions. However the sniffer receiver 48 is active so as to detect a user terminal connected to the macrocell base station 22 entering the femtocell 32. The 'Wake-on-LAN' controller 64 is also switched-on. The femto's backhaul connection 36 with the core network is active. The backhaul connection is kept active to maintain radio frequency synchronisation of the femto and restrict boot-up times to the order of milliseconds.

In this example, the femto's rate of energy consumption is roughly 60% of that in the ready/active state.

In light sleep state the femto detects radio transmissions using the sniffer receiver 48.

It can be considered that light sleep state consumes more power than deep sleep state but wake-up is less difficult, the femto in light sleep state being able to detect a user terminal and so transit to ready/active state.

### Ready/Active State

In ready/active state, the components of the femto are switched-on except for the sniffer receiver 48. The receiver-transmitter 650 is activated and so makes pilot transmissions. The pilot transmissions are detectable by a user terminal entering the femtocell 32.

### Monitoring level of Usage

As a continuous process, the femto 30 monitors its level of usage and keeps a record of its level of usage at different times. The purpose of this time profiling is to get reasonable knowledge of expected femto usage patterns. Various options are possible how to achieve this profiling.

In this example, the level of usage is divided into three categories, namely very low, medium to high, and very high. There are two thresholds dividing the three categories. The level of usage is determined (and recorded) every half-hour.

The overall effect is that the femto builds a picture of traffic usage patterns over time and is able to autonomously decide in which state to be in consequence. For example, a femto deployed in a single person's home enters deep sleep state between lam and 6 am because the femto expects it is highly unlikely that the user will make a call at this time. The femto then pre-emptively shifts to ready/active state between 6am and 7 am as the user is known to use the phone before leaving for work. The femto then goes into light sleep state during office hours and then into ready/active state when the user is expected to come home from work.

### Switching between the states

As shown in Figure 4:
(a) Starting in deep sleep (DS) state upon the primary state controller expecting medium to high usage, the femto transits to light sleep (LS) state;
(b) starting in deep sleep state (DS) upon the primary state controller expecting very high usage, the femto transits to ready/active (RA) state;
(c) starting in light sleep (LS) state upon the primary state controller expecting very low usage, the femto transits to deep sleep (DS) state;
(d) starting in light sleep (LS) state upon the primary state controller expecting very high usage or detecting and active user terminal in the femtocell, the femto transits to ready/active (RA) state;
(e) starting in ready/active (RA) state upon the primary state controller expecting medium to high usage but no active user terminal is detected in the femtocell, the femto transits to light sleep (LS) state; and
(f) starting in ready/active (RA) state upon the primary state controller expecting very low usage and no active user terminal is detected in the femtocell, the femto transits to deep sleep (DS) state.

It should be noted that, in this example, transiting out of ready/active state is only undertaken provided sufficient radio coverage is provided by macrocells to handle emergency calls. Measurements of pilot signals from the macrocell base stations to user terminals in the femtocell confirm whether the macrocell coverage is sufficient. If not, the femto is kept in ready/active state.

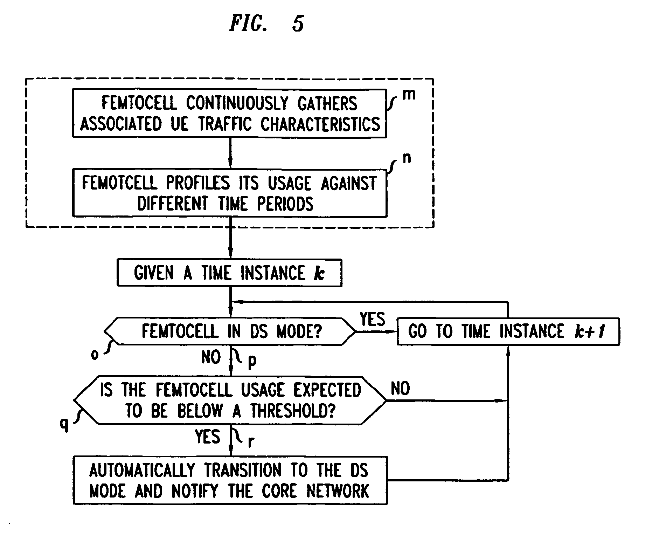

An example of the transition between light sleep and deep sleep states is shown in Figure 5. As a continuous process, the femto 30 monitors (step m) its level of usage and keeps (step n) a record of its level of usage at different times. At a time instance k, the primary state controller 46 of the femto determines (step o) whether the femto is in deep sleep state. If no (step p) a determination is made (step q), whether based on the acquired statistics the usage is expected to be below the threshold at which transit to deep sleep state is made. If yes (step r), the primary state controller 46 causes the femto to shift to the more power efficient deep sleep state and notify the core network of this change.

It should be noted that due to the 'Wake-on-LAN' controller 64, the core network may instruct the femto at any time via backhaul signalling to shift to any state. This includes when the femto is in the deep sleep state.

### General

The present invention may be embodied in other specific forms without departing from its essential characteristics. For example, the profiling of femto usage can be done by sampling at various time intervals and/or over any time scale sufficient or appropriate to enable a profile to be built up. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of switching a small cell base station (30) for wireless telecommunications between states, the method comprising:
taking measurements (44) at multiple times in each of at least one predetermined period of the level of small cell base station usage for wireless telecommunications,
determining from the measurements estimates of level of usage expected as a function of time in a further period,
selecting (46) the state of the small cell base station dependent upon the expected level of usage and the time within the further period, and
the small cell base station switching to the selected state;
**characterised in that** the states comprise an active state (R), a light dormant state (LS) and a deep dormant state (DS);
in which in the light dormant state the small cell base station does not make pilot signal transmissions and monitors the small cell for user terminals (34) using a receiver (48) of signals at the frequency band of a macrocell; and
in which in the deep dormant state the small cell base station does not make pilot signal transmissions and the receiver (48) of the signals at the frequency band of the macrocell is inactive so the small cell base station does not monitor the small cell for user terminals.

2. A method according to claim 1, in which in the active state the small cell base station makes pilot signal transmissions.

3. A method according to any preceding claim, in which the selecting the state of the small cell base station dependent upon the expected level of usage and the time within the further period comprises determining whether the expected level exceeds a predetermined threshold.

4. A method according to any preceding claim, in which the or each predetermined period is a day or twenty-four hour period, and the further period is a subsequent day or twenty-four hour period.

5. A small cell base station (30) for wireless telecommunications comprising:
a processor (44) configured to collect measurements at multiple times in each of at least one predetermined period of the level of small cell base station usage for wireless telecommunications and to determine from the measurements estimates of level of usage expected as a function of time in a further period,
a controller (46,62) configured to select the state of the small cell base station dependent upon the expected level of usage and the time within the further period and to instruct the small cell base station to switch to the selected state,
**characterised in that** the states comprise active state, light dormant state and deep dormant state; and
the small cell base station includes a receiver (48) of signals at the frequency band of the macrocell configured to operate in the light dormant state (LS) of the small cell base station to detect user terminals in the small cell, the small cell base station in the light dormant state not making pilot signal transmissions;
the receiver (48) of signals at the frequency band of the macrocell also being configured to be inactive in the deep dormant state (DS) of the small cell base station, the small cell base station in the deep dormant state not making pilot signal transmissions.

6. A small cell base station according to claim 5, in which the receiver of signals at the frequency band of the macrocell is also configured to be inactive when the small cell base station is in active state (R).

7. A small cell base station according to claims 5 or 6, including a controller (64) configured to receive a control command from outside commanding the small cell base station to switch state.

## Patentansprüche

1. Verfahren zum Umschalten einer kleinzelligen Basisstation (30) für drahtlose Telekommunikationen zwischen Zuständen, wobei das Verfahren umfasst:
Durchführen von Messungen (44), zu mehreren Zeitpunkten innerhalb einer jeden von mindestens einer vorbestimmten Zeitspanne, des Grads der Nutzung einer kleinzelligen Basisstation für drahtlose Telekommunikationen,
Ermitteln, aus den Messungen, von Schätzungen des erwarteten Nutzungsgrads in Abhängigkeit von dem Zeitpunkt innerhalb einer weiteren Zeitspanne,
Auswählen (46) des Zustands der kleinzelligen Basisstation in Abhängigkeit von dem erwarteten Nutzungsgrad und dem Zeitpunkt innerhalb der weiteren Zeitspanne, und
Umschalten der kleinzelligen Basisstation in den ausgewählten Zustand;
**dadurch gekennzeichnet, dass** die Zustände einen aktiven Zustand (R), einen leicht schlafenden Zustand (LS) und einen tief schlafenden Zustand (DS) umfassen;
wobei die kleinzellige Basisstation in dem leicht schlafenden Zustand keine Pilotsignale überträgt und die kleine Zelle unter Verwendung eines Empfängers (48) von Signalen im Frequenzband einer Makrozelle nach Benutzerendgeräten (34) überwacht; und
wobei die kleinzellige Basisstation im tief schlafenden Zustand keine Pilotsignale überträgt und der Empfänger (48) der Signale im Frequenzband der Makrozelle nicht aktiv ist, so dass die kleinzellige Basisstation die kleine Zelle nicht nach Benutzerendgeräten überwacht.

2. Verfahren nach Anspruch 1, wobei die kleinzellige Basisstation im aktiven Zustand Pilotsignale überträgt.

3. Verfahren nach einem beliebigen der vorstehenden Ansprüche, wobei das Auswählen des Zustands der kleinzelligen Basisstation in Abhängigkeit von dem erwarteten Nutzungsgrad und vom Zeitpunkt innerhalb der weiteren Zeitspanne das Ermitteln, ob der erwartete Nutzungsgrad einen vorbestimmten Grenzwert überschreitet, umfasst.

4. Verfahren nach einem beliebigen der vorstehenden Ansprüche, wobei die oder jede vorbestimmte Zeitspanne einen Tag oder vierundzwanzig Stunden beträgt, und die weitere Zeitspanne den nachfolgenden Tag oder die nachfolgenden vierundzwanzig Stunden darstellt.

5. Kleinzellige Basisstation (30) für drahtlose Telekommunikation, umfassend:
Einen Prozessor (44), konfiguriert für die Erfassung von Messungen, zu mehreren Zeitpunkten innerhalb einer jeden von mindestens einer vorbestimmten Zeitspanne, des Grads der Nutzung einer kleinzelligen Basisstation für drahtlose Telekommunikation, und für die Ermittlung, aus den Messungen, von Schätzungen des erwarteten Nutzungsgrads in Abhängigkeit von dem Zeitpunkt innerhalb einer weiteren Zeitspanne,
einen Controller (46, 62), konfiguriert für das Auswählen des Zustands der kleinzelligen Basisstation und für das Anweisen der kleinzelligen Basisstation, in den ausgewählten Zustand umzuschalten,
**dadurch gekennzeichnet, dass** die Zustände einen aktiven Zustand, einen leicht schlafenden Zustand und einen tief schlafenden Zustand umfassen; und
die kleinzellige Basisstation einen Empfänger (48) von Signalen in dem Frequenzband der Makrozelle umfasst, welcher für den Betrieb im leicht schlafenden Zustand (LS) der kleinzelligen Basisstation konfiguriert ist, um Benutzerendgeräte in der kleinen Zelle zu detektieren, wobei die kleinzellige Basisstation im leicht schlafenden Zustand keine Pilotsignale überträgt;
der Empfänger (48) von Signalen in dem Frequenzband der Makrozelle ebenfalls dafür konfiguriert ist, im tief schlafenden Zustand (DS) der kleinzelligen Basisstation nicht aktiv zu sein, wobei die kleinzellige Basisstation im tief schlafenden Zustand keine Pilotsignale überträgt.

6. Kleinzellige Basisstation nach Anspruch 5, wobei der Empfänger von Signalen in dem Frequenzband der Makrozelle ebenfalls dafür konfiguriert ist, nicht aktiv zu sein, wenn sich die kleinzellige Basisstation im aktiven Zustand (R) befindet.

7. Kleinzellige Basisstation nach den Ansprüchen 5 oder 6, umfassend einen Controller (64), welcher für den Empfang eines Steuerungsbefehls von außen für die Anweisung der kleinzelligen Basisstation, den Zustand umzuschalten, konfiguriert ist.

## Revendications

1. Procédé de commutation d'une station de base de petite cellule (30) pour des télécommunications sans fil entre des états, le procédé comprenant les étapes suivantes :
prendre des mesures (44) à plusieurs reprises au cours de chaque période prédéterminée parmi l'au moins une période prédéterminée du niveau d'utilisation de la station de base de petite cellule pour des télécommunications sans fil,
déterminer, à partir des mesures, des estimations du niveau d'utilisation prévu en fonction du temps au cours d'une période suivante,
sélectionner (46) l'état de la station de base de petite cellule en fonction du niveau d'utilisation prévu et du temps au cours de la période suivante, et
la commutation de la station de base de petite cellule dans l'état sélectionné ;
**caractérisé en ce que** les états comprennent un état actif (R), un état dormant léger (LS) et un état dormant profond (DS) ;
dans lequel dans l'état dormant léger, la station de base de petite cellule n'effectue pas de transmissions de signaux pilotes et surveille les terminaux utilisateurs (34) de la petite cellule en utilisant un récepteur (48) de signaux à la bande de fréquences d'une macrocellule ; et
dans lequel dans l'état dormant profond, la station de base de petite cellule n'effectue pas de transmissions de signaux pilotes et le récepteur (48) des signaux à la bande de fréquences de la macrocellule est inactif de sorte que la station de base de petite cellule ne surveille pas les terminaux utilisateurs de la petite cellule.

2. Procédé selon la revendication 1, dans lequel dans l'état actif la station de base de petite cellule effectue des transmissions de signaux pilotes.

3. Procédé selon l'une quelconque des revendications précédentes, dans lequel la sélection de l'état de la station de base de petite cellule en fonction du niveau d'utilisation prévu et du temps au cours de la période suivante consiste à déterminer si le niveau prévu dépasse un seuil prédéterminé.

4. Procédé selon l'une quelconque des revendications précédentes, dans lequel la période prédéterminée ou chaque période prédéterminée est une période d'un jour ou de vingt-quatre heures, et la période suivante est une période ultérieure d'un jour ou de vingt-quatre heures.

5. Station de base de petite cellule (30) pour des télécommunications sans fil comprenant :
un processeur (44) configuré pour collecter des mesures à plusieurs reprises au cours de chaque période prédéterminée parmi l'au moins une période prédéterminée du niveau d'utilisation de la station de base de petite cellule pour des télécommunications sans fil et pour déterminer, à partir des mesures, des estimations du niveau d'utilisation prévu en fonction du temps au cours d'une période suivante,
un dispositif de commande (46, 62) configuré pour sélectionner l'état de la station de base de petite cellule en fonction du niveau d'utilisation prévu et du temps au cours de la période suivante et pour ordonner à la station de base de petite cellule de commuter dans l'état sélectionné,
**caractérisée en ce que** les états comprennent un état actif, un état dormant léger et un état dormant profond ; et
la station de base de petite cellule comprend un récepteur (48) de signaux à la bande de fréquences de la macrocellule configuré pour fonctionner dans l'état dormant léger (LS) de la station de base de petite cellule pour détecter des terminaux utilisateurs dans la petite cellule, la station de base de petite cellule dans l'état dormant léger n'effectuant pas de transmissions de signaux pilotes ;
le récepteur (48) de signaux à la bande de fréquences de la macrocellule étant aussi configuré pour être inactif dans l'état dormant profond (DS) de la station de base de petite cellule, la station de base de petite cellule dans l'état dormant profond n'effectuant pas de transmissions de signaux pilotes.

6. Station de base de petite cellule selon la revendication 5, dans laquelle le récepteur de signaux à la bande de fréquences de la macrocellule est également configuré pour être inactif lorsque la station de base de petite cellule est dans l'état actif (R).

7. Station de base de petite cellule selon la revendication 5 ou 6, comprenant un dispositif de commande (64) configuré pour recevoir une commande de contrôle de l'extérieur commandant à la station de base de petite cellule de commuter d'un état à un autre.
